# EUROPÄISCHE PATENTSCHRIFT

(11) **EP 0 625 486 B1**
(45) Veröffentlichungstag und Bekanntmachung des Hinweises auf die Patenterteilung: **11.03.1998**
(21) Anmeldenummer: 93120191.7
(22) Anmeldetag: 15.12.1993
(51) Int. Cl.: C04B 18/24, C08L 97/02

(54) **Verfahren zur Herstellung einer Dämmplatte**
Process for the production of an insulating board.
Production d'un panneau isolant.

(30) Priorität: 18.05.1993 DE 4316561
(43) Veröffentlichungstag der Anmeldung: 23.11.1994
(73) Patentinhaber: BIROSTO-AG, CH-4469 Anwil (CH); HFB ENGINEERING GmbH, D-04129 Leipzig (DE)
(72) Erfinder: Schubert, geborene Müller, Bärbel, D-04318 Leipzig (DE)
(74) Vertreter: Borchard, Wolfgang

(56) Entgegenhaltungen:
- EP-A- 0 292 628
- DE-C- 325 297
- DE-C- 814 270
- FR-A- 2 097 956
- FR-A- 2 386 500
- FR-E- 12 352
- US-A- 2 944 930
- CHEMICAL ABSTRACTS, vol. 113, no. 4, 23. Juli 1990, Columbus, Ohio, US; abstract no. 28390c, S. GABIR ET AL. Seite 273 ; & BIOL. WASTES, Bd.31, Nr.4, 1990 Seiten 311 - 314

## Beschreibung

Die Erfindung betrifft ein Verfahren zur Herstellung einer Dämmplatte auf der Basis von Pflanzenteilen, die zur Wärmedämmung und Schallisolierung sowie als Verpackungseinlage geeignet ist.

Bekannt sind Verfahren zur Herstelltung synthetischer Dämmstoffe sowie Dämmstoffe auf der Basis von Naturrohstoffen.
Zum Herstellen der synthetischen Dämmstoffe, dazu zählen insbesondere organische Schäume wie Polystyrol - Hartschaum, wird unter anderen, Erdöl verwendet. Eine Folge davon ist, daß diese Schäume nur unter großen, Aufwand recycelbar sind und dadurch nur unzureichend den gesteigerten Forderungen nach einer guten Umweltverträglichkeit gerecht werden.
Bekannt sind außerdem Verfahren zur Herstellung von Mineralwolle - Dämmstoffen, deren gesundheitsschädigende Wirkung insofern nicht auszuschließen ist, als diese Dämmstoffe Faseranteile enthalten, die so klein sind, daß sie als lungengängig eingeschatzt werden müssen.

Bekannt sind weiterhin Verfahren zur Herstellung von Dämmplatten aus Naturrohstoffen, bei denen Hölzer heimischer Baumarten zu Spänen beziehungsweise Fasern definierter Größe verarbeitet werden, die ihrerseits zu den bekannten Holzwolle - Leichtbauplatten oder Faserdämmstoffplatten weiterverarbeitet werden.

In der DE C 325 297 werden zum Ersatz für Dämmplatten aus Kork leichte Bausteine verfertigt, die aus entkörnten und getrockneten Maiskolben gebildet werden. Diese werden in beliebigen Zerkleinerungsmaschinen auf Korngröße zerkleinert und mit einem Bindemittel versetzt, in Formen gebracht und in diesen zu Platten verpreßt. Als bekanntes Bindemittel für leichte Bausteine wird Gips, Magnesit, Harz, Leimgips oder Wasserglas eingesetzt. Die nach dem Pressen erhaltenen Platten werden getrocknet und als leichte, Korksteine ersetzende Bausteine verwendet.

Bekannt ist nach FR A 2 386 500 zur Isolation und Schalldämmung ein gegen Feuer beständiger Leichtbeton, bei dem die beim Dreschen von Getreide oder Mais als Spreu anfallenden Pflanzenbestandteile mit Zement vermischt werden. Der Dämmstoff aus Spreu enthält zur Erhöhung der Festigkeit Glasfiber oder synthetische Fasern.

Diese bekannten Dämmstoffe auf der Basis von Pflanzenteilen erfüllen zwar die Forderungen bezüglich der Umweltverträglichkeit, sind hingegen in ihren technischen Wirkungen, insbesondere hinsichtlich des Wärmedämmvermögens und des Brandverhaltens, den synthetischen Dämmstoffen nicht gleichwertig.

Aufgabe der Erfindung ist es, ein Verfahren zur Herstellung einer Dämmplatte aus Pflanzenteilen zu entwickeln, welche die vorstehend aufgezeigten Nachteile nicht aufweist und gut recycelbar ist.

Erfindungsgemäß wird die Aufgabe bei einem Verfahren zur Herstellung einer Dämmplatte auf der Basis von Pflanzenteilen dadurch gelöst, daß die Pflanzenteile hauptsächlich aus granulatartigem Pflanzenmark, beispielsweise dem von Sonnenblumen, Mais oder Kokosnuß, gebildet werden, das Pflanzenmark
a) eine Größe von 0,2 bis 5 cm aufweist und mit einem Zusatz von Zement auf Calziumaluminatsulfat - Basis oder eines auf aluminatischer Basis erhärtenden Zementes in einem Masseverhältnis von Mark : Zement = 1 : 1,5 bis 1 : 3 versehen,
b) eine Größe von 0,2 bis 5 cm aufweist und mit Wasserglas im Verhältnis 1 : 3 gemischt oder
c) bis zu einem Zentimeter groß ist und mit einem Zusatz eines Klebemittels versehen, wobei bei den Varianten a) und b) über einen Zeitraum von bis zu drei Minuten gemischt wird, unter Verdichten in eine den gewünschten Abmessungen entsprechende Form gebracht wird.

Das granulatartig aufbereitete Pflanzenmark wird in einem Mischer oder durch Aufsprühen mit einem Bindemittel oder einem Klebemittel in Berührung gebracht und von diesem allseitig umhüllt. Anschließend wird das auf diese Weise behandelte Pflanzenmark durch Abbinden des Klebemittels zu der gewünschten Dämmplatte verbunden. Seine biologische Resistenz erhält das Pflanzenmark in erster Linie dadurch, daß als Folge des allseitigen beziehungsweise vollständigen Umhüllens ein Eindringen von Mikroorganismen vermieden werden kann.

Nachfolgend wird die Erfindung anhand von drei Ausführungsbeispielen näher erläutert.

### Beispiel Nr. 1 :

Granulatartiges Pflanzenmark in der Größe von 0.2 bis 5 Zentimetern wird in einen Mischer eingebracht und mit Wasser angefeuchtet. Über das angefeuchtete Pflanzenmark wird ein mineralisches Bindemittel in Form von Zement auf Calciumaluminatsulfat - Basis in einem Verhältnis von Mark zu Zement = 1 : 2,75 aufgestäubt und die Gesamtmischung circa 2 Minuten lang gemischt. Das auf diese Weise mit dem Bindemittel umhüllte Pflanzenmark wird danach unter leichtem Verdichten in die eine Dämmplatte ergebende Form gebracht, in der der Zement abbindet. Nach dem Abbinden des Zementes erfolgt das Ausformen der auf diese Weise hergestellten Dämmplatte. Eine Dämmplatte wie vorstehend beschrieben, weist eine Wärmeleitfähigkeit von 0.055 W/(m K) auf. Die Druckspannung bei 10 % Stauchung beträgt 0,10 N/mm². Die Plattenrohdichte wurde mit 100 kg/m³ ermittelt.

### Beispiel Nr. 2

Granulatartiges Pflanzenmark in der Größe von 0,2 bis 5 Zentimetern wird in einen Mischer eingebracht und mit Wasserglas, dem ein Härter zugesetzt sein kann, im Verhältnis von 1 : 3 gemischt. Eine auf diesen Bestandteilen aufbauende und im weiteren analog zu Beispiel Nr. 1 hergestellte Dämmplatte weist eine Wärmeleitfähigkeit von 0,045 W/(m K) auf. Die Druckspannung bei 10 % Stauchung beträgt 0, 12 N/mm². Die Plattenrohdichte wurde mit 70 kg/m³ ermittelt.
Anstelle des zugesetzten Härters kann die Aushärtung auch mittels C0₂ erfolgen, welches durch die mit kleinen Öffnungen versehene Form gepreßt wird.

### Beispiel Nr. 3

Zwecks Herstellung einer Verpackungseinlage zum Verpacken eines empfindlichen technischen Gerätes wird granulatartigem Pflanzenmark, in der Größe bis zu einem Zentimeter, ein Klebemittel, beispielsweise PVAc - Leim, in einer solchen Menge zugesetzt, daß die Markpartikel gleichmäßig und vollständig umschlossen werden. Alsdann wird das auf diese Weise umhüllte Pflanzenmark unter stärkerem Verdichten in eine der Verpackungseinlage entsprechende Negativform eingegeben.
Nach dem Abbinden des Klebemittels erfolgt das Ausformen der auf vorstehende Art und Weise hergestellten Verpackungseinlage.

## Patentansprüche

1. Verfahren zur Herstellung einer Dämmplatte auf der Basis von Pflanzenteilen, die zur Wärmedämmung und Schallisolierung sowie als Verpackungseinlage geeignet ist, dadurch gekennzeichnet, daß die Pflanzenteile hauptsächlich aus granulatartigem Pflanzenmark, beispielsweise dem von Sonnenblumen, Mais oder Kokosnuß, gebildet werden, das Pflanzenmark
a) eine Größe von 0,2 bis 5 cm aufweist und mit einem Zusatz von Zement auf Calziumaluminatsulfat - Basis oder eines auf aluminatischer Basis erhärtenden Zementes in einem Masseverhältnis von Mark : Zement = 1 : 1,5 bis 1 : 3 versehen,
b) eine Größe von 0,2 bis 5 cm aufweist und mit Wasserglas im Verhältnis 1 : 3 gemischt oder
c) bis zu einem Zentimeter groß ist und mit einem Zusatz eines Klebemittels versehen, wobei bei den Varianten a) und b) über einen Zeitraum von bis zu drei Minuten gemischt wird, unter Verdichten in eine den gewünschten Abmessungen entsprechende Form gebracht wird.

2. Verfahren nach Anspruch 1, dadurch gekennzeichnet, daß zur Verhinderung einer ungewollt hohen Wasseraufnahme das Besprühen des Pflanzenmarks mit Paraffin oder mit einem anderen hydrophobierenden Mittel vorgenommen wird.

3. Verfahren nach Anspruch 1, dadurch gekennzeichnet, daß als Klebemittel tierische oder pflanzliche Kleber oder Plastkleber oder Bitumen oder mineralische Bindemittel, beispielsweise Wasserglas, Kieselsol oder Bentonit, verwendet werden.

4. Verfahren nach Anspruch 1, dadurch gekennzeichnet, daß das Pflanzenmark eine Größe von 0,2 bis 5 cm aufweist und mit einem Zusatz von Zement auf Calziumaluminatsultat - Basis oder eines auf aluminatischer Basis erhärtenden Zementes in einem Masseverhältnis von Mark : Zement = 1 : 1,5 bis 1 : 3 versehen, in eine den gewünschten Abmessungen entsprechende Form unter leichtem Verdichten gebracht wird derart, daß sich eine Plattenrohdichte von 100 kg/m³ einstellt.

5. Verfahren nach Anspruch 1, dadurch gekennzeichnet, daß das Pflanzenmark eine Größe von 0,2 bis 5 cm aufweist und mit Wasserglas im Verhältnis 1 : 3 gemischt in eine den gewünschten Abmessungen entsprechende Form unter leichtem Verdichten gebracht wird derart, daß sich eine Plattenrohdichte von 70 kg/m³ einstellt.

## Claims

1. Method to make plant component based insulating board for use in heat and sound insulation and as a packaging liner, characterized in that the plant components consist mainly of granule-type pith from sunflower, corn or coconut, for example, and in that the pith
a) is sized from 0.2 - 5 cm and has calcium aluminate sulfate based cement or cement hardening on an aluminate basis added at a pith-to-cement weight ratio from 1:1.5 - 1:3,
b) is sized from 0.2 - 5 cm and mixed with water glass at a ratio of 1:3,
c) is sized up to 1 cm, has a cementing material added with mixing times of up to 3 mins. for versions a) and b) and is compressed to give the required dimensions.

2. Method acc. to claim 1 characterized in that the pith is sprayed with paraffin or some other hydrophobing agent to prevent undesirable water absorption.

3. Method acc. to claim 1 characterized in that the cementing material used is of animal or plant origin or is a plastic adhesive or bitumen or mineral cementing agent such as water glass, silica so or bentonite.

4. Method acc. to claim 1 characterized in that the pith is sized 0.2 - 5 cm, has calcium aluminate sulfate based cement or cement hardening on an aluminate basis added at a pith-to-cement weight ratio from 1:1.5 - 1:3 and is slightly compressed to give the desired dimensions resulting in board with a bulk density of 100 kg/m³.

5. Method acc. to claim 1 characterized in that the pith is sized 0.2 - 5 cm, mixed with water glass at a ratio of 1:3 and slightly compressed to give the desired dimensions resulting in board with a bulk density of 70 kg/m³.

## Revendications

1. Procédé de fabrication d'un panneau isolant sur la base d'éléments végétaux, isolant contre les effets de la chaleur et le bruit, et pouvant aussi servir de garniture d'emballage, ainsi caractérisé : Les éléments végétaux sont constitués principalement de moelle granulée, par exemple de tournesols, de maïs ou de noix de coco, la moelle
a) ayant une longueur de 0,2 à 5 cm et étant enrichie de ciment à base de sulfate d'aluminate de calcium ou d'un ciment durcissant sur base d'aluminate dans un rapport massique moelle : ciment = 1 : 1,5 jusqu'à 1 : 3,
b) ayant une longueur de 0,2 à 5 cm et étant mélangée au verre soluble dans une proportion de 1 : 3 ou
c) mesurant jusqu'à un centimètre et étant enrichie d'un adhésif, le mélange étant effectué pendant une durée jusqu'à trois minutes dans les variantes a) et b) et la masse ainsi obtenue prenant par compression une forme correspondant aux dimensions désirées.

2. Procédé selon revendication 1, ainsi caractérisé :
Pour empêcher une absorption d'eau exagérée, la moelle est aspergée de paraffine ou d'une autre substance hydrophobe.

3. Procédé selon revendication 1, ainsi caractérisé :
Comme adhésif, on emploie des adhésifs animaux ou végétaux, ou bien des colles plastiques ou du bitume ou des liants minéraux, par exemple le verre soluble, le sol de silice ou la bentonite.

4. Procédé selon revendication 1, ainsi caractérisé :
La moelle mesure de 0,2 à 5 cm et est enrichie de ciment à base de sulfate d'aluminate de calcium ou de ciment durcissant à base d'aluminate dans un rapport massique moelle : ciment = 1 : 1,5 jusqu'à 1 : 3, elle prend une forme aux dimensions désirées par légère compression, de sorte que la masse volumique apparente du panneau atteigne 100 kg/m³.

5. Procédé selon revendication 1, ainsi caractérisé :
La moelle mesure de 0,2 à 5 cm et est mélangée au verre soluble dans une proportion de 1 : 3 pour prendre une forme aux dimensions désirées par légère compression, de sorte que la masse volumique apparente du panneau atteigne 70 kg/m³.
